# EUROPÄISCHE PATENTSCHRIFT

(11) **EP 1 089 530 B1**
(45) Veröffentlichungstag und Bekanntmachung des Hinweises auf die Patenterteilung: **17.01.2007**
(21) Anmeldenummer: 00119905.8
(22) Anmeldetag: 13.09.2000
(51) Int. Cl.: H04M 3/42, H04M 7/00

(54) **Verfahren zum Verifizieren eines Bereitschaftszustandes einer an einer Kommunikationsanlage angemeldeten Applikation**
Method for verifying the stand-by situation of an application registered in a communication system
Procédé pour vérifier la situation d'attente d'une application enregistrée dans un système de communication

(30) Priorität: 28.09.1999 DE 19946504
(43) Veröffentlichungstag der Anmeldung: 04.04.2001
(73) Patentinhaber: SIEMENS AKTIENGESELLSCHAFT, 80333 München (DE)
(72) Erfinder: Zimmermann, Werner, Dr., 58708 Menden (DE)

(56) Entgegenhaltungen:
- DE-A- 4 202 817
- DE-A- 19 706 780
- DE-A- 19 711 720
- DE-A- 19 808 368
- DE-A1- 3 432 144
- DE-A1- 4 330 755
- US-A- 5 875 234

## Beschreibung

Aus der Produktschrift "Sonderausgabe telcom report und Siemens Magazin Com: ISDN im Büro - HICOM", Siemens AG, Berlin und München, 1985, insbesondere der Seiten 58 bis 75 ist eine für eine zeitschlitz-basierte Informationsvermittlung, insbesondere Sprachdatenvermittlung ausgebildete Kommunikationsanlage HICOM bekannt. Ein Anschluß von Kommunikationsendgeräten, beispielsweise von Telefonen, an die Kommunikationsanlage erfolgt dabei über eine Mehrzahl von Teilnehmeranschlußports bereitstellende Teilnehmeranschlußeinheiten. Ein Anschluß an ein Kommunikationsnetz, beispielsweise ein ISDN-Kommunikationsnetz, erfolgt über eine in der Kommunikationsanlage angeordnete, einen Netzanschlußport bereitstellende Netzanschlußeinheit.

Durch eine in der Kommunikationsanlage angeordnete zentrale Steuereinheit wird die Informationsvermittlung in der Kommunikationsanlage gesteuert. Hierzu werden über die Anschlußports empfangene Steuerinformationen an die zentrale Steuereinheit der Kommunikationsanlage weitergeleitet und von dieser in entsprechende Steuerinformationen für die Kommunikationsanlage umgewandelt. So wird beispielsweise für eine Datenübermittlung zwischen zwei Kommunikationseinrichtungen über die Kommunikationsanlage durch die zentrale Steuereinheit ein Verbindungsweg über die, die entsprechenden Anschlußports bereitstellenden Teilnehmeranschlußeinheiten bzw. Netzanschlußeinheit und ein in der Kommunikationsanlage angeordnetes Koppelfeld geschaltet. Für eine Adressierung eines entsprechenden Anschlußports der Kommunikationsanlage benötigt die zentrale Steuereinheit eine Information über die Existenz und den aktuellen Zustand dieses Anschlußports. Ist ein adressiertes Kommunikationsendgerät - beispielsweise aufgrund eines Defektes, einer Deaktivierung oder einer Unterbrechung der Verbindung mit der Kommunikationsanlage - nicht erreichbar, veranlaßt die zentrale Steuereinheit in der Regel eine negative Verbindungsreaktion an einer rufenden Kommunikationseinrichtung - beispielsweise ein Besetztzeichen - oder eine standardmäßig eingestellte, anlagenspezifische Ersatzfunktion - beispielsweise eine Ansage oder eine Rufweiterschaltung.

Im Zuge der Verschmelzung von Sprachverarbeitung und Datenverarbeitung sind häufig Datenverarbeitungseinrichtungen, wie z.B. 'Personal Computern' oder 'Workstations', an die Kommunikationsanlage angeschlossen. Ein Anschluß der Datenverarbeitungseinrichtungen an die Kommunikationsanlage erfolgt dabei in der Regel über ein Kommunikationsnetz - beispielsweise ein digitales ISDN-Kommunikationsnetz - oder über ein mit der Kommunikationsanlage verbundenes lokales Netzwerk LAN (Local Area Network). Für eine Steuerung einer Datenübermittlung über die Kommunikationsanlage laufen auf den Datenverarbeitungseinrichtungen jeweils eine bidirektionale Verbindung mit der Kommunikationsanlage initiierende Applikationen ab. Für ein Einrichten einer Verbindung zwischen der Datenverarbeitungseinrichtung und der Kommunikationsanlage, d.h. für eine Bekanntmachen der Datenverarbeitungseinrichtung an der Kommunikationsanlage ist ein Anmelden der Datenverarbeitungseinrichtung gemäß bekannter Login-Prozeduren an der Kommunikationsanlage notwendig. Im Zuge der Anmeldung wird eine der Applikation zugeordnete Rufnummer und ein dem Benutzer der Applikation zugeordnetes Paßwort an die den Anschluß des Datenverarbeitungseinrichtung an die Kommunikationsanlage realisierende Netzanschlußeinheit übermittelt. Stimmen die übermittelte Rufnummer und das Paßwort mit der in der Netzanschlußeinheit hinterlegten Rufnummer und dem dieser Rufnummer zugeordnet gespeicherten Paßwort überein, wird die Applikation in der Kommunikationsanlage als angemeldet verzeichnet. Durch die Zuordnung einer eindeutigen Rufnummer zu einer Applikation wird eine angemeldete Applikation durch die zentrale Steuereinheit der Kommunikationsanlage wie ein normaler aktivierter Anschlußport der Kommunikationsanlage behandelt.

Im Gegensatz zu den an der Kommunikationsanlage angeschlossenen Kommunikationsendgeräten ist es bei den auf den Datenverarbeitungseinrichtungen ablaufenden, die Datenübermittlung über die Kommunikationsanlage steuernden Applikationen üblich diese zu deaktivierten, d.h. sich an der Kommunikationsanlage abzumelden. Eine derartige Deaktivierung führt bei herkömmlichen Kommunikationsendgeräten dazu, daß einerseits Informationen über im Zeitraum der Deaktivierung eingehende Rufe verlorengehen und andererseits bei einer Reinitialisierung des Kommunikationsendgerätes, d.h. bei einer erneuten Inbetriebnahme, die für diesen Anschlußport aktivierten Leistungsmerkmale - wie beispielsweise Anrufumleitung oder Rufweiterschaltung - zurückgesetzt, oder die dem Anschlußport in der zentralen Steuereinheit zugeordnete Daten - beispielsweise eine Anruferliste - gelöscht werden.

Der vorliegenden Erfindung liegt die Aufgabe zugrunde, ein Verfahren anzugeben, durch welches ein Verlust von einer Applikation zugeordneten Leistungsmerkmalen und Daten infolge einer Deaktivierung dieser Applikationen vermieden wird.

Die Lösung dieser Aufgabe erfolgt erfindungsgemäß mit den Merkmalen des Patentanspruchs 1.

Eine Deaktivierung einer an der Kommunikationsanlage angemeldeten Applikation bewirkt erfindungsgemäß nicht deren Deaktivierung in der zentralen Steuereinheit der Kommunikationsanlage, sondern lediglich eine Änderung einer den Status der Applikation kennzeichnenden - in der den Anschluß an die Kommunikationsanlage realisierenden Anschlußeinheit hinterlegten - Information, so daß die Deaktivierung der Applikation ausschließlich einen Einfluß auf die applikationsspezifische Zustandsführung in der den Anschluß an die Kommunikationsanlage realisierenden Anschlußeinheit hat. Ein wesentlicher Vorteil des erfindungsgemäßen Verfahrens besteht somit darin, daß die einer Applikation zugeordneten in der zentralen Steuereinheit hinterlegten Leistungsmerkmale und Daten auch während einer Deaktivierung dieser Applikationen gültig sind, so daß bei einem mit einer deaktivierten Applikation initiierten Verbindungsaufbau Anlagenaktionen gemäß situationsabhängiger und applikationsindividueller Einstellungen und nicht gemäß situationsunabhängiger, standardmäßig vorgesehenen Einstellungen eingeleitet werden können.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß der einer Applikation zugeordnete Anschlußport nach Ablauf einer Zeitspanne - z.B. nach drei Tagen - in der keine Aktivierung der Applikation erfolgt ist automatisch deaktivierbar ist, so daß eine bestehende Sperre für eine Anmeldung der Applikation ausgehend von einer anderen Datenverarbeitungseinrichtung nach dieser Zeitspanne automatisch aufgehoben ist.

Ein weiterer Vorteil von in den Unteransprüchen definierten Ausgestaltungen der Erfindung besteht darin, daß für ein Anmelden einer Applikation an der Kommunikationsanlage zusätzlich zu einer der Applikation zugeordneten Rufnummer und einem benutzerindividuellen Paßwort eine der Applikation zugeordnet Lizenznummer übermittelt werden muß, wobei die Applikation nur dann an der Kommunikationsanlage als angemeldet gilt, wenn noch keine Applikation mit derselben Lizenznummer an der Kommunikationsanlage angemeldet ist. Somit kann auf einfache Weise ein mehrfaches Anmelden mit einer unauthorisierten Kopie der Applikation unterbunden werden.

Ein Ausführungsbeispiel der Erfindung wird im folgenden anhand der Zeichnung näher erläutert.

Dabei zeigen:
- Fig. 1:: ein Strukturbild zur schematischen Darstellung einer Kommunikationsanlage und von über ein lokales Netzwerk mit der Kommunikationsanlage verbundenen Datenverarbeitungseinrichtungen;
- Fig. 2:: ein Ablaufdiagramm zur Veranschaulichung der beim erfindungsgemäßen Verfahren ablaufenden wesentlichen Verfahrensschritte.

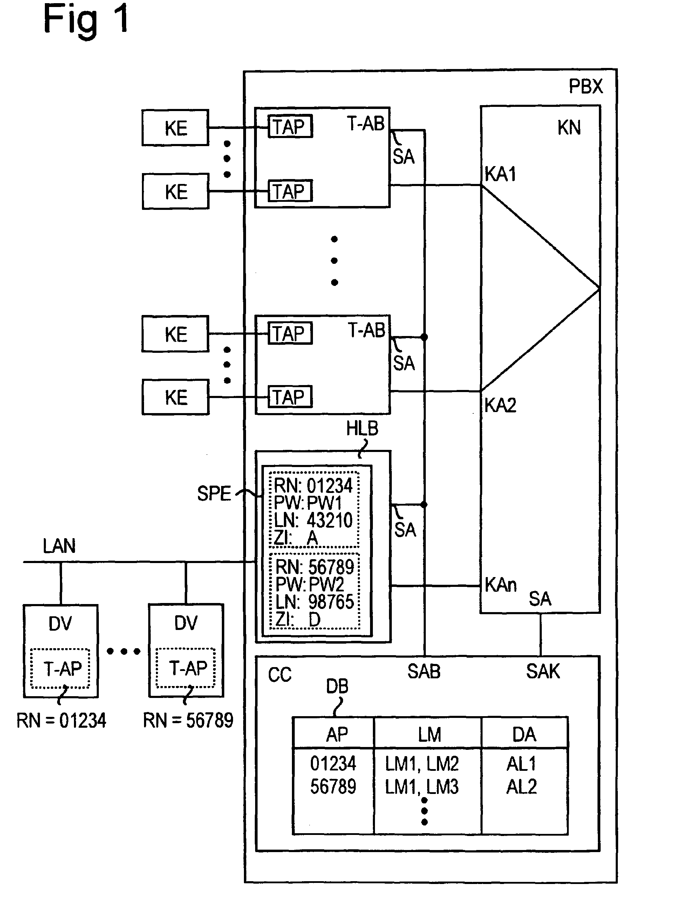

Fig. 1 zeigt eine schematische Darstellung einer Kommunikationsanlage PBX mit einer in dieser angeordneten, als LAN-Anschlußeinheit HLB ausgestalteten Baugruppe. Die Kommunikationsanlage PBX weist weitere Teilnehmer- bzw. Netzanschlußeinheiten - beispielhaft sind zwei Teilnehmer-Anschlußeinheiten T-AB dargestellt - zum Anschluß von Kommunikationsendgeräten an die Kommunikationsanlage PBX auf. Des weiteren beinhaltet die Kommunikationsanlage PBX ein mehrere bidirektionale, Zeitmultiplex-orientierte Koppel-Anschlüsse KA1,...,KAn aufweisendes Koppelfeldmodul KN, wobei die Zeitmultiplex-orientierten Koppel-Anschlüsse KA1,...,KAn als PCM-Anschlüsse (Puls Code Modulation) - auch als PCM-Highways, Speech-Highways oder S_{2M}-Anschlüsse bezeichnet - ausgestaltet sind. Jeder PCM-Highway umfaßt im allgemeinen zum einen 30 Nutzkanäle, welche jeweils als ISDN-orientierte B-Kanäle (Integrated Services Digital Network) mit einer Übertragungsrate von 64 kBit/s ausgestaltet sind und zum anderen einen Signalisierungskanal, welcher als ISDN-orientierter D-Kanal mit einer Übertragungsrate von 64 kBit/s ausgestaltet ist. Über den Koppel-Anschluß KAn ist das Koppelfeldmodul KN mit einem bidirektionalen, Zeitmultiplex-orientierten Anschluß der LAN-Anschlußeinheit HLB verbunden. Über weitere PCM-Anschlüsse KA1, KA2 ist das Koppelfeldmodul KN jeweils mit einem bidirektionalen, Zeitmultiplex-orientierten Anschluß der Teilnehmer-Anschlußeinheiten T-AB verbunden.

Des weiteren ist in der Kommunikationsanlage PBX eine mehrere Steueranschlüsse SA aufweisende zentrale Steuereinheit CC angeordnet. Über einen Steueranschluß SAK ist die zentrale Steuereinheit CC mit einem Steuereingang SA des Koppelfeldmoduls KN verbunden. Über einen weiteren Steueranschluß SAB ist die zentrale Steuereinheit CC über einen Steuerbus mit einem auf der LAN-Anschlußeinheit HLB angeordneten Steueranschluß SA und mit Steueranschlüssen SA der Teilnehmer-Anschlußeinheiten T-AB verbunden. Durch die zentrale Steuereinheit CC erfolgt dabei unter anderem eine Steuerung eines Verbindungsaufbaus zwischen zwei Anschlußeinheiten T-AB, HLB über das Koppelfeldmodul KN für eine bidirektionale Datenübermittlung zwischen an der Kommunikationsanlage PBX angeschlossenen Kommunikationseinrichtungen KE, DV.

An den Teilnehmer-Anschlußeinheiten T-AB sind über Schnittstellen bereitstellende Teilnehmeranschlußports TAP interne Kommunikationsendgeräte KE an die Kommunikationsanlage PBX angeschlossen. Ein Anschluß von digitalen internen Kommunikationsendgeräten KE an die Kommunikationsanlage PBX erfolgt üblicherweise über S₀-Schnittstellen oder mittels daraus abgeleiteten Schnittstellen, wie beispielsweise Uₚ₀-Schnittstellen. Allgemein umfassen eine U_{P0}- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist. Alternativ können analoge Kommunikationsendgeräte über a/b-Schnittstellen an die Kommunikationsanlage PBX angeschlossen werden.

Über eine Schnittstelle der LAN-Anschlußeinheit HLB ist an die Kommunikationsanlage PBX zusätzlich ein lokales Netzwerk LAN (Local Area Network) angeschlossen. Im lokalen Rechnernetz LAN sind beispielhaft mehrere Datenverarbeitungseinrichtungen DV angeordnet, wobei auf den Datenverarbeitungseinrichtungen DV jeweils eine Telefonapplikation T-AP implementiert ist. Durch eine derartige Telefonapplikation T-AP stehen einem Benutzer der Datenverarbeitungseinrichtung DV alle Funktionsmerkmale - häufig auch als 'Features' bezeichnet - eines herkömmlichen Telefons zur Verfügung. In der Literatur wird eine derartige Applikation deshalb häufig auch als virtuelles Telefon bezeichnet. Die Verwendung einer derartigen Telefonapplikation T-AP setzt jedoch die Ausgestaltung der Datenverarbeitungseinrichtungen DV mit einer sogenannten 'Soundkarte' zum Anschluß geeigneter Sprach-Eingabemittel - z.B. eines Mikrofons - und Sprach-Ausgabemittel - z.B. eines Lautsprechers - an die Datenverarbeitungseinrichtung DV voraus.

Eine Übermittlung von sprachorientierten Daten über das lokale Netzwerk LAN erfolgt dabei beispielsweise auf Basis der, auf dem bekannten TCP/IP-Protokoll (Transmission Control Protokoll / Internet Protokoll) basierenden Protokolle H.323 bzw. H.320.

Nach einer Anmeldung der auf einer Datenverarbeitungseinrichtung DV laufenden Telefonapplikation T-AP an der Kommunikationsanlage PBX bzw. der LAN-Anschlußeinheit HLB wird die Telefonapplikation T-AP durch die zentrale Steuereinheit CC wie ein herkömmliches internes Kommunikationsendgerät KE behandelt. Für eine Anmeldung einer Telefonapplikation T-AP an der LAN-Anschlußeinheit HLB ist jeder Telefonapplikation T-AP eine eindeutige Rufnummer zugeordnet. Beispielhaft ist einer, auf einer der Datenverarbeitungseinrichtungen DV ablaufenden ersten Telefonapplikation T-AP die Rufnummer RN = 01234 und einer, auf einer weiteren Datenverarbeitungseinrichtung DV ablaufenden zweiten Telefonapplikation T-AP eine Rufnummer RN = 56789 zugeordnet. In der LAN-Anschlußeinheit HLB ist für jede im lokalen Netzwerk LAN befindliche Telefonapplikation T-AP, d.h. für alle auf einer im lokalen Netzwerk LAN angeordneten Datenverarbeitungseinrichtung DV eingerichteten Telefonapplikationen T-AP die jeweilige applikationsspezifische Rufnummer RN, ein zugeordnetes Paßwort PW, eine der jeweiligen Telefonapplikation T-AP zugeordnete Lizenznummer LZ und eine Zustandsinformation ZI über den aktuellen Zustand der Telefonapplikation T-AP hinterlegt. Die erfindungsgemäße Zustandsinformation ZI zeigt dabei an, ob die Telefonapplikation T-AP aktuell aktiv A oder deaktiv D ist.

Des weiteren wird nach einer Anmeldung einer Telefonapplikation T-AP in einer Datenbasis DB der zentralen Steuereinheit CC eine der Telefonapplikation T-AP zugeordnete Anmeldeinformation gesetzt, die anzeigt, daß ein der Telefonapplikation T-AP zugeordneter Applikationsport AP der Kommunikationsanlage PBX aktiviert ist. Beispielhaft sind Anmeldeinformationen für die erste und die zweite Telefonapplikation T-AP dargestellt. Die Anmeldeinformationen enthalten jeweils die der Telefonapplikation T-AP zugeordnete Rufnummer RN = 01234, RN = 56789, eine Information über die jeweiligen für die Telefonapplikation T-AP eingerichteten kommunikationsanlagen-spezifischen Leistungsmerkmale LM und einen Verweis auf für die Telefonapplikation T-AP in der Kommunikationsanlage PBX hinterlegte Daten DA. Beispiele für die einer Telefonapplikation T-AP zugeordneten kommunikationsanlagen-spezifischen Leistungsmerkmale LM sind eine aktivierte Anrufumleitung, - weiterschaltung oder -zuschaltung. Beispiele für die in der Kommunikationsanlage PBX gespeicherten telefonapplikationsspezifischen Daten DA sind eine Anruferliste oder telefonapplikations-spezifische Abwesenheitstexte.

Wird nun eine an der LAN-Anschlußeinheit HLB angemeldete Telefonapplikation T-AP an der Datenverarbeitungseinrichtung DV deaktiviert, bewirkt dies nicht, daß die Anmeldeinformation in der Datenbasis DB der zentralen Steuereinheit CC gelöscht wird, sondern es wird lediglich die in der LAN-Anschlußeinheit HLB für die Telefonapplikation T-AP hinterlegte Zustandsinformation ZI von aktiv A auf deaktiv D gesetzt. Somit wird eine deaktivierte Telefonapplikation T-AP in der zentralen Steuereinheit CC weiterhin als vorhanden geführt und unterliegt bei ihrer Adressierung, d.h. bei einem während der Deaktivierung mit ihr initiierten Rufaufbau der gleichen kommunikationsanlagen-spezifischen Zustandsführung wie jeder andere aktivierte Teilnehmer-Anschlußport TAP. Bei einem Rufaufbau mit einer deaktivierten Telefonapplikation T-AP wird der durch die zentrale Steuereinheit CC über die LAN-Anschlußeinheit HLB initiierte Rufaufbau durch die LAN-Anschlußeinheit HLB aufgrund der Zustandsinformation ZI = D negativ quittiert. Dadurch, daß die Telefonapplikation T-AP in der zentralen Steuereinheit CC jedoch weiterhin als angemeldet, d.h. aktiv registriert ist, besteht die Möglichkeit eine kommunikationsanlagen-spezifische Reaktion aufgrund der für den gerufenen Applikationsport AP hinterlegten portspezifischen Einstellungen, d.h. Leistungsmerkmalen LM einzuleiten.

Eine Deaktivierung des Applikationsports AP in der zentralen Steuerung CC der Kommunikationsanlage PBX ist nur durch eine entsprechende Administrationseingabe möglich. Zusätzlich kann vorgesehen sein, daß der Applikationsport AP nach Ablauf eines Zeitgliedes, z.B. nach 3 Tagen automatisch deaktiviert wird.

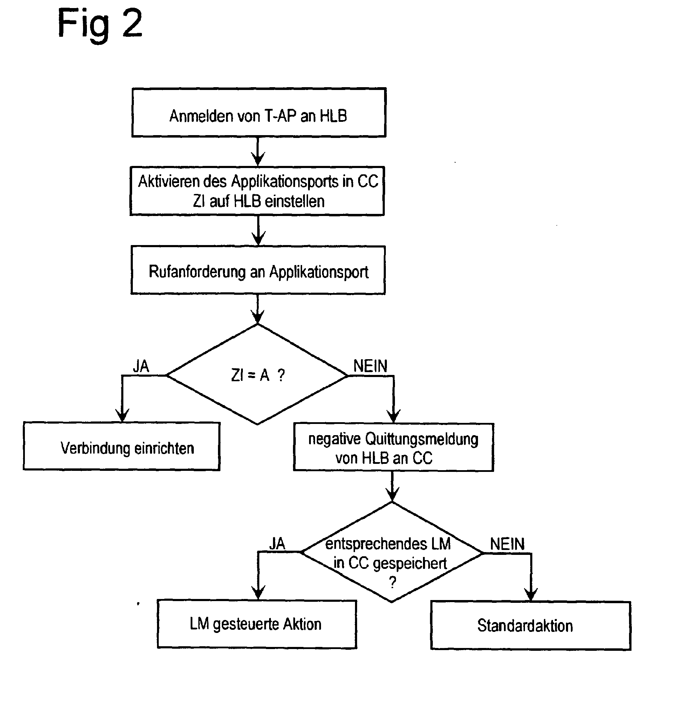

Fig. 2 zeigt ein Ablaufdiagramm zur Veranschaulichung der bei einem Rufaufbau mit einer auf einer Datenverarbeitungseinrichtung DV ablaufenden Telefonapplikation T-AP über die Kommunikationsanlage PBX ablaufenden wesentlichen Verfahrensschritte. Startet ein Teilnehmer die Telefonapplikation T-AP an einer Datenverarbeitungseinrichtung DV wird in einem nächsten Schritt eine Verbindung zwischen der Datenverarbeitungseinrichtung DV und der LAN-Anschlußeinheit HLB über das lokale Netzwerk LAN aufgebaut. Die Anmeldung an der LAN-Anschlußeinheit HLB der Kommunikationsanlage PBX kann dabei auf einfache Weise z.B. durch Anwählen eines bestimmten internen Teilnehmeranschlußports der Kommunikationsanlage PBX erfolgen.

Im Rahmen der Anmeldeprozedur der Telefonapplikation T-AP erfolgt aus sicherheitstechnischen Gründen durch die LAN-Anschlußeinheit HLB sowohl eine Identifizierungsüberprüfung der Telefonapplikation T-AP als auch zusätzlich eine Authentifizierungsüberprüfung des, der Datenverarbeitungseinrichtung DV zugeordneten Teilnehmers. Hierzu wird für die Identifizierung die der Telefonapplikation T-AP zugeordnete Rufnummer RN an die LAN-Anschlußeinheit HLB übermittelt. Für die Authentifizierung des der Datenverarbeitungseinrichtung DV zugeordneten Teilnehmers wird ein teilnehmerindividuelles Paßwort PW über die LAN-Anschlußeinheit HLB an die Kommunikationsanlage PBX übermittelt. Zusätzlich ist vorgesehen die der Telefonapplikation T-AP zugeordnete Lizenznummer LN an die LAN-Anschlußeinheit HLB zu übermitteln. Die Applikation gilt dabei nur dann als angemeldet, wenn noch keine Telefonapplikation T-AP mit derselben Lizenznummer LN an der Kommunikationsanlage PBX angemeldet ist. Somit kann auf einfache Weise ein mehrfaches Anmelden mit einer unauthorisierten Kopie der Telefonapplikation T-AP unterbunden werden.

Anhand einer auf der LAN-Anschlußeinheit HLB gespeicherten Datenbasis, welche die zur Anmeldung berechtigten Rufnummern RN, teilnehmerindividuellen Paßwörter PW und Lizenznummern LN enthält, findet eine Überprüfung der Anmeldung der Telefonapplikation T-AP statt. Stimmt das, der übermittelten Rufnummer RN der Telefonapplikation T-AP in der Datenbasis als zugeordnet gespeicherte Paßwort PW und die zugeordnet gespeicherte Lizenznummer LN mit dem übermittelten Paßwort PW und der übermittelten Lizenznummer LN überein, ist die Anmeldung bestätigt und die Telefonapplikation T-AP wird in der Datenbasis DB der zentralen Steuereinheit CC durch den Eintrag einer entsprechenden Anmeldeinformation als angemeldet vermerkt. Somit gilt ein der Telefonapplikation T-AP zugeordneter Applikationsport AP der Kommunikationsanlage PBX in der zentralen Steuereinheit CC als aktiviert. Gleichzeitig wird die Zustandsinformation ZI in der LAN-Anschlußeinheit HLB auf aktiv A gesetzt.

Bei einer an der Kommunikationsanlage PBX für die Telefonapplikation T-AP eingehenden Rufanforderung übermittelt die zentrale Steuereinheit CC eine entsprechende Verbindungsaufbaumeldung an die LAN-Anschlußeinheit HLB. Die LAN-Anschlußeinheit HLB ermittelt daraufhin den Status der dem entsprechenden Applikationsport AP zugeordnete Zustandsinformation ZI. Ist die Zustandsinformation ZI gleich aktiv A wird in bekannter Weise eine Verbindung mit der gerufenen Telefonapplikation T-AP eingerichtet. Ist die Zustandsinformation ZI jedoch, z.B. aufgrund einer in der Zwischenzeit erfolgten Deaktivierung gleich deaktiv D übermittelt die LAN-Anschlußeinheit HLB eine negative Quittungsmeldung an die zentrale Steuereinheit CC.

Infolge des Empfangs einer negativen Quittungsmeldung überprüft die zentrale Steuereinheit CC, ob für den der gerufenen Telefonapplikation T-AP zugeordneten Applikationsport AP der Kommunikationsanlage PBX ein entsprechendes Leistungsmerkmal LM, z.B. ein Abwesenheitstext, aktiviert ist. Ist dies der Fall, wird eine leistungsmerkmalsgesteuerte Aktion der Kommunikationsanlage PBX durch die zentrale Steuereinheit CC veranlaßt. Ist kein entsprechendes Leistungsmerkmal LM aktiviert, wird eine standardmäßig voreingestellte Aktion der Kommunikationsanlage PBX, wie beispielsweise einen Eintrag des rufenden Teilnehmers in eine Anruferliste oder die Aktivierung eines Rückrufes für die Telefonapplikation T-AP ausgeführt. Diese standardmäßig voreingestellten Aktionen können jedoch auch zusätzlich zu einer leistungsmerkmalsgesteuerte Aktion der Kommunikationsanlage PBX ausgeführt werden.

## Patentansprüche

1. Verfahren zum Verifizieren eines Bereitschaftszustands einer an einer Kommunikationsanlage (PBX) angemeldeten, auf einer Datenverarbeitungseinrichtung (DV) eingerichteten Applikation (T-AP),
bei dem in einer die Datenverarbeitungseinrichtung (DV) mit der Kommunikationsanlage (PBX) verbindenden Anschlußeinheit (HLB) eine Information (ZI) über den aktuellen Bereitschaftsstatus (A, D) der Applikation (T-AP) gespeichert ist,
bei dem im Rahmen eines von einer zentralen Steuereinheit (CC) der Kommunikationsanlage (PBX) zu der Applikation (T-AP) durchgeführten Verbindungsaufbaus von der Anschlußeinheit (HLB) in Abhängigkeit der gespeicherten Information (ZI) eine Entscheidung über die Annahme der aufzubauenden Verbindung getroffen wird und eine entsprechende Meldung an die zentrale Steuereinheit (CC) übermittelt wird,
wobei die Meldung eine negative Rufquittungsmeldung ist, falls die Information (ZI) über den aktuellen Bereitschaftsstatus (A, D) gleich deaktiv ist,
bei dem die zentrale Steuereinheit (CC) infolge des Empfangs einer negativen Rufquittungsmeldung überprüft, ob für den der gerufenen Applikation (T-AP) zugeordneten Anschlußport ein entsprechendes Leistungsmerkmal aktiviert ist, und
bei dem für den Fall, dass ein entsprechendes Leistungsmerkmal (LM) aktiviert ist, eine leistungsmerkmalgesteuerte Aktion der Kommunikationsanlage (PBX) durch die zentrale Steuereinheit (CC) veranlasst wird.

2. Verfahren nach Anspruch 1,
**dadurch gekennzeichnet,**
**daß** in der zentralen Steuerung (CC) für eine angemeldete Applikation (T-AP) eine Anmeldeinformation, die eine der Applikation (T-AP) zugeordnete Rufnummer (RN) umfaßt, im Sinne eines aktivierten Anschlußports der Kommunikationsanlage (PBX) gespeichert wird.

3. Verfahren nach Anspruch 1 oder 2,
**dadurch gekennzeichnet,**
**daß** zusätzlich zur Rufnummer (RN) in der zentralen Steuereinheit (CC) Informationen über die den Anschlußports der Kommunikationsanlage (PBX) jeweils zugeordneten Leistungsmerkmale (LM) und Daten (DA) gespeichert werden.

4. Verfahren nach einem der vorhergehenden Ansprüche,
**dadurch gekennzeichnet,**
**daß** ein Verbindungsaufbau durch die Anschlußeinheit (HLB) in den Fällen abgelehnt wird, in denen die Applikation (T-AP) deaktiviert ist.

5. Verfahren nach einem der Ansprüche 2 bis 4,
**dadurch gekennzeichnet,**
**daß** eine Deaktivierung des Anschlußports der Kommunikationsanlage (PBX) durch eine Übermittlung einer entsprechenden Deaktivierungsnachricht von der Anschlußeinheit (HLB) an die zentrale Steuerung (CC) erfolgt.

6. Verfahren nach Anspruch 5,
**dadurch gekennzeichnet,**
**daß** eine Deaktivierung des Anschlußport nach Ablauf einer einstellbaren Zeitspanne ohne Aktivierung der Applikation (T-AP) automatisch durch die Anschlußeinheit (HLB) veranlaßt wird.

7. Verfahren nach einem der vorhergehenden Ansprüche,
**dadurch gekennzeichnet,**
**daß** für eine Anmeldung der Applikation (T-AP) die der Applikation (T-AP) zugeordnete applikationsspezifische Rufnummer (RN) und ein teilnehmerindividuelles Paßwort (PW) an die Anschlußeinheit (HLB) übermittelt werden.

8. Verfahren nach Anspruch 7,
**dadurch gekennzeichnet,**
**daß** für eine Anmeldung zusätzlich eine der Applikation (T-AP) zugeordnete applikationsspezifische Lizenznummer (LN) übermittelt wird.

9. Verfahren nach einem der vorhergehenden Ansprüche,
**dadurch gekennzeichnet,**
**daß** die Datenverarbeitungseinrichtung (DV) über ein lokales Netzwerk (LAN) an die Kommunikationsanlage (PBX) angeschlossen wird.

## Claims

1. Method for verifying a standby status of an application (TAP) logged in to a PBX system (PBX) and set up on a data processing device (DV),
in which information (ZI) relating to the current standby status (A, D) of the application (T-AP) is stored in a connection unit (HLB) which connects the data processing device (DV) to the PBX system (PBX),
in which, during a connection set-up to the application (T-AP) carried out by a central control unit (CC) of the PBX system (PBX), a decision regarding the acceptance of the connection which is to be set up is made by the connection unit (HLB) depending on the stored information (ZI) and a corresponding message is transferred to the central control unit (CC),
whereby the message is a negative call acknowledgement message if the information (ZI) relating to the current standby status (A, D) is equal to active,
in which the central control unit (CC), as a result of receiving a negative call acknowledgement message, checks whether a corresponding service feature is activated for the access port allocated to the called application (T-AP), and
in which, in the event that a corresponding service feature (LM) is activated, a service-feature-controlled action of the PBX system (PBX) is initiated by the central control unit (CC).

2. Method according to Claim 1,
**characterized in that**
login information comprising a telephone number (RN) allocated to the application (T-AP) is stored in the central control unit (CC) for a logged-in application (T-AP), in terms of an activated access port of the PBX system (PBX).

3. Method according to Claim 1 or 2,
**characterized in that**
information relating to the service features (LM) and data (DA) allocated in each case to the access ports of the PBX system (PBX) is stored in addition to the telephone number (RN) in the central control unit (CC).

4. Method according to one of the preceding claims,
**characterized in that**
a connection set-up is rejected by the connection unit (HLB) in cases where the application (T-AP) is de-activated.

5. Method according to one of Claims 2 to 4,
**characterized in that**
the access port of the PBX system (PBX) is de-activated by transferring a corresponding de-activation message from the connection unit (HLB) to the central control unit (CC).

6. Method according to Claim 5,
**characterized in that**
a de-activation of the access port is automatically initiated by the connection unit (HLB) at the end of a definable time period without activation of the application (T-AP).

7. Method according to one of the preceding claims,
**characterized in that**,
for a login of the application (T-AP), the application-specific telephone number (RN) allocated to the application (T-AP) and a subscriber-individual password (PW) are transferred to the connection unit (HLB).

8. Method according to Claim 7,
**characterized in that**
an application-specific licence number (LN) allocated to the application (T-AP) is transferred for a login.

9. Method according to one of the preceding claims,
**characterized in that**
the data processing device (DV) is connected via a local area network (LAN) to the PBX system (PBX).

## Revendications

1. Procédé pour vérifier un état d'attente d'une application (T-AP) installée sur un dispositif de traitement de données (DV) et enregistrée auprès d'une installation de communication (PBX),
dans lequel une information (ZI) concernant l'état d'attente actuel (A, D) de l'application (T-AP) est mémorisée dans une unité de raccordement (HLB) reliant le dispositif de traitement de données (DV) à l'installation de communication (PBX),
dans lequel, dans le cadre d'un établissement de liaison effectué d'une unité de commande centrale (CC) de l'installation de communication (PBX) à l'application (T-AP), une décision concernant l'acceptation de la liaison à établir est prise par l'unité de raccordement (HLB) en fonction de l'information mémorisée (ZI) et un message correspondant est transmis à l'unité de commande centrale (CC),
le message étant un message négatif de confirmation d'appel si l'information (ZI) concernant l'état d'attente actuel (A, D) est désactivée,
dans lequel l'unité de commande centrale (CC) vérifie suite à la réception d'un message négatif de confirmation d'appel si une fonctionnalité correspondante est activée pour le port de raccordement associé à l'application appelée (T-AP), et
dans lequel, si une fonctionnalité correspondante (LM) est activée, une action, commandée par la fonctionnalité, de l'installation de communication (PBX) est déclenchée par l'unité de commande centrale (CC).

2. Procédé selon la revendication 1,
**caractérisé par le fait que**, dans la commande centrale (CC), une information d'enregistrement qui comprend un numéro d'appel (RN) associé à l'application (T-AP) est mémorisée pour une application enregistrée (T-AP) comme un port de raccordement activé de l'installation de communication (PBX).

3. Procédé selon la revendication 1 ou 2,
**caractérisé par le fait que**, en plus du numéro d'appel (RN), des informations concernant les fonctionnalités (LM) et données (DA) respectivement associées aux ports de raccordement de l'installation de communication (PBX) sont mémorisées dans l'unité de commande centrale (CC).

4. Procédé selon l'une des revendications précédentes,
**caractérisé par le fait qu'**un établissement de liaison est refusé par l'unité de raccordement (HLB) dans les cas dans lesquels l'application (T-AP) est désactivée.

5. Procédé selon l'une des revendications précédentes 2 à 4,
**caractérisé par le fait qu'**une désactivation du port de raccordement de l'installation de communication (PBX) s'effectue au moyen d'une transmission d'un message de désactivation correspondant par l'unité de raccordement (HLB) à la commande centrale (CC).

6. Procédé selon la revendication 5,
**caractérisé par le fait qu'**une désactivation du port de raccordement est provoquée automatiquement par l'unité de raccordement (HLB) après expiration d'un intervalle de temps réglable sans activation de l'application (T-AP).

7. Procédé selon l'une des revendications précédentes,
**caractérisé par le fait que**, pour un enregistrement de l'application (T-AP), le numéro d'appel (RN) spécifique à l'application et donc associé à l'application (T-AP) ainsi qu'un mot de passe (PW) propre à l'abonné sont transmis à l'unité de raccordement (HLB).

8. Procédé selon la revendication 7,
**caractérisé par le fait que**, pour un enregistrement, un numéro de licence (LN) spécifique à l'application et donc associé à l'application (T-AP) est transmis en plus.

9. Procédé selon l'une des revendications précédentes,
**caractérisé par le fait que** le dispositif de traitement de données (DV) est raccordé à l'installation de communication (PBX) par l'intermédiaire d'un réseau local (LAN).
